# EUROPÄISCHE PATENTSCHRIFT

(11) **EP 0 831 436 B1**
(45) Veröffentlichungstag und Bekanntmachung des Hinweises auf die Patenterteilung: **25.08.1999**
(21) Anmeldenummer: 97890182.5
(22) Anmeldetag: 11.09.1997
(51) Int. Cl.: G07F 7/10, G06F 17/60

(54) **Verfahren zum Einlesen von Formularen**
Method of reading forms
Procédé de lecture de formulaires

(30) Priorität: 16.09.1996 AT 163796
(43) Veröffentlichungstag der Anmeldung: 25.03.1998
(73) Patentinhaber: IMPROX Datenverarbeitung AG, 2345 Brunn am Gebirge (AT)
(72) Erfinder: Hübl, Markus, Dipl.-Ing., 2380 Perchtoldsdorf (AT); Oberleitner, Wolfgang, Dipl.-Ing., 2345 Brunn am Gebirge (AT)
(74) Vertreter: Babeluk, Michael, Dipl.-Ing. Mag., Patentanwälte Babeluk - Krause

(56) Entgegenhaltungen:
- EP-A- 0 446 634
- US-A- 4 694 147

## Beschreibung

Die vorliegende Erfindung betrifft ein Verfahren zum Einlesen von Formularen, insbesonders von Bankbelegen, in eine EDV-Anlage, gemäß dem Oberbegriff von Patentanspruch 1.

Als Formular im obigen Sinn wird ein Schriftstück verstanden, das Eintragungen in einer vorbestimmten räumlichen Anordnung aufweist.

Zur Durchführung von Banküberweisungen und dgl. ist es erforderlich, die Informationen, die ein Kunde auf einem Formular, etwa einem Überweisungsformular, handschriftlich eingetragen oder aufgedruckt hat, in eine maschinenlesbare Form zu bringen. Ursprünglich wurden zu diesem Zweck die auf einem solchen Beleg enthaltenen Texte, wie etwa Namen, Kontonummern, Betrag und dgl. von Bedienungspersonen über eine Tastatur eingegeben. Bei fortschrittlicheren Lösungen werden die vom Kunden abgegebenen Belege in Briefkästen gesammelt und danach mit einem Scanner eingescannt. Ein Scanner ist ein Gerät, das ein Formular optisch abtastet und einen Datensatz erzeugt, der den jeweiligen Grauwert und gegebenenfalls die Farbe jedes Bildpunktes enthält. Es handelt sich daher um einen Bild-Datensatz. Um zu der codierten Information zu gelangen, die der Beleg eigentlich enthält, muß eine Zeichenerkennung durchgeführt werden, bei die einzelnen Buchstaben und Zahlen erkannt werden. Zu diesem Zweck sind sogenannte OCR-Programme entwickelt worden. Insbesonders bei der Interpretation von handschriftlichen Belegen gibt es einen bestimmten Anteil nicht lesbarer Zeichen oder fehlerhaft erkannter Zeichen. Daher muß nach der Zeichenerkennung eine Korrektur durchgeführt werden. Zu diesem Zweck wird der Text-Datensatz auf einem Bildschirm angezeigt und eine Bedienungsperson kann Fehler korrigieren und nicht lesbare Zeichen ergänzen. Bekannte Programme unterstützen die Bedienungsperson, indem möglicherweise fehlerhafte Zeichen hervorgehoben werden und indem bestimmte Plausibilitätsüberprüfungen durchgeführt werden. So kann etwa nachgeprüft werden, ob die angegebene Kontonummer tatsächlich existiert. Weiters unterlegen manche Programme die Darstellung des Text-Datensatzes mit dem Bild-Datensatz, um etwaige Fehler leichter ersichtlich zu machen.

Dieses bekannte Verfahren ermöglicht die Erzielung von Einsparungen gegenüber der ursprünglichen Lösung, besitzt aber nach wie vor Nachteile. So wird dem Kunden keinerlei Rückmeldung gegeben, ob der in einen Briefkasten eingeworfene Beleg Mängel aufweist oder nicht. Weiters ist es zwar möglich, einen Durchschlag des Beleges abzustempeln, aber dies ermöglicht keine wirkliche Verfolgung der Transaktion. Aus diesen Gründen ist die Akzeptanz eines solchen Verfahrens durch Kunden einer Bank relativ gering. Außerdem hat sich herausgestellt, daß der Aufwand zur Nachbearbeitung groß ist. Da nicht überall ein vollwertiges Backoffice eingerichtet werden kann, das für das Einscannen und Korrigieren der Belege ausgestattet ist, muß insbesonders bei dezentral organisierten Bankinstituten ein relativ großer Aufwand für die Logistik getrieben werden, um die Belege zu sammeln und zu verarbeiten. Weiters können die Kunden ihre Transaktionen nur innerhalb der jeweiligen Bankinstitute durchführen.

Die EP-A 446 634 beschreibt ein System zur Verarbeitung und zum Einlesen von Dokumenten, wobei durch Zeichenerkennung ermittelte Beträge oder Summen solcher Beträge mit codierten Informationen verglichen werden. Um etwaige Fehler schneller aufspüren zu können, ist dabei die Möglichkeit vorgesehen, auf einem Bildschirm neben den codierten Daten Bilddaten der entsprechenden Dokumente anzuzeigen, um diese vergleichen zu können. Auf diese Weise können Fehler schneller aufgefunden werden. Das Verfahren, das in diesem Dokument beschrieben ist, ist jedoch im wesentlichen ein einstufiges Verfahren, wie es oben beschrieben ist. Es ist dabei eine einzelne Verarbeitungsstelle vorgesehen, die mit einem Bildschirm ausgestattet ist, so daß an diesem Arbeitsplatz die gesamte Verarbeitung erfolgen kann. Wie bereits ausgeführt, bedeutet dies, daß das entweder eine aufwendige Logistik zum Sammeln der Papierbelege und zur Weiterleitung an die zentrale Erfassungsstelle erforderlich ist, oder daß beim dezentralen Einscannen eine relativ große Fehlerrate vorliegen wird.

Ein weiteres bekanntes Verfahren, wie es etwa in der US-A 4 694 147 beschrieben ist, versucht diese Nachteile zu vermeiden, indem die Vorgänge des Einscannens und der Korrektur dem Anwender, also dem Bankkunden, aufgebürdet werden. Nach dem Einscannen wird der Kunde aufgefordert, etwaige Mängel, wie etwa nicht lesbare Zeichen oder durch die Plausibilitätsüberprüfung erkannte offenbar unrichtige Zeichen über eine alphanumerische Tastatur zu korrigieren. Der entsprechende Auftrag, also beispielsweise eine Überweisung, wird erst akzeptiert, wenn der Text-Datensatz vollständig korrigiert ist. Da eine solche Bearbeitung für den Kunden sehr aufwendig ist, ist für ein solches Verfahren nur eine minimale Akzeptanz zu erwarten.

Aufgabe der vorliegenden Erfindung ist es, ein Verfahren zu schaffen, bei der die oben beschriebenen Nachteile vermieden werden können, und das es insbesonders ermöglicht, Formulare, wie etwa Bankbelege zuverlässig und kostensparend in eine maschinenlesbare Form zu bringen, ohne die Anwender dadurch zu übermäßig zu belasten. Weiters soll die Qualität der zu erkennenden Belege gesteigert werden, und es soll die Möglichkeit vorgesehen werden, die entsprechenden Transaktionen nachvollziehbar zu machen. Eine weitere Aufgabe der Erfindung ist es, ein System zu schaffen, das eine geringe Logistik bei der Bearbeitung von Papierbelegen erfordert, und dennoch eine hohe Zuverlässigkeit bei möglichst geringem Arbeitseinsatz aufweist.

Diese Aufgaben werden erfindungsgemäß durch die Merkmale des kennzeichnenden Teils von Patentanspruch 1 gelöst. Wesentlich an der Erfindung ist, daß der Vorgang der Belegerkennung zweigeteilt wird. Ein erster Bearbeitungsschritt erfolgt am Bestätigungs-Bildschirm durch einen Anwender, etwa einen Bankkunden. Im Zuge dieser ersten Bearbeitung wird eine Vor-Überprüfung durchgeführt. Zweck dieser Vor-Überprüfung ist es im wesentlichen, festzustellen, ob grundsätzlich ein zulässiger Vorgang vorliegt, beispielsweise, ob es sich bei dem eingescannten Formular um ein Überweisungsformular handelt. Weiters wird dem Anwender eine Bild-Darstellung angezeigt, um zu demonstrieren, welche Information der Computer nun tatsächlich übernimmt. Der Anwender kann nunmehr bestätigen, daß die Transaktion durchgeführt werden soll. Nach Vorliegen dieser Bestätigung erfolgt die Weiterleitung des Bild-Datensatzes. In einem Back-Office oder in einer entsprechend ausgerüsteten Zentrale wird nun in einem zweiten Schritt die eigentliche Zeichenerkennung samt Korrektur von dem dafür vorgesehenen Personal durchgeführt.

Es ist jedoch zur Entlastung des Zentralrechners möglich, bereits unmittelbar nach der Bestätigung durch den Anwender dezentral eine Zeichenerkennung in der Selbstbedienungseinheit durchzuführen, sofern diese kapazitätsmäßig dafür in der Lage ist. Es ist jedoch festzuhalten, daß der Anwender davon nicht betroffen ist, da diese Zeichenerkennung im Hintergrund durchgeführt wird, oder nachdem der Anwender das Gerät bereits verlassen hat. Die Korrektur wird jedenfalls zentral durchgeführt.

Es hat sich herausgestellt, daß durch das erfindungsgemäße Verfahren einerseits die Akzeptanz der Kunden wesentlich gesteigert werden kann. Das Einscannen bedeutet für einen Kunden keine Mehrarbeit im Vergleich zu dem Abtrennen und Einwerfen des Formulars in einen Briefkasten, ermöglicht jedoch eine aktive Bestätigung, daß der Computer die Daten übernommen hat. Interessanterweise gibt es Hinweise darauf, daß sich durch das erfindungsgemäße Verfahren die Qualität der abgegebenen Formulare verbessert, so daß der Aufwand bei der Korrektur geringer wird. Außerdem wird für die Bank der Aufwand für das Einscannen und die Logistik im Zusammenhang mit den Formularen eingespart.

Im Vergleich zu der Lösung, bei der der Kunde die Korrektur vornehmen muß, ist eine erhebliche Verringerung der Belästigung feststellbar. Es ist nicht mehr erforderlich, dem Kunden eine alphanumerische Tastatur zur Verfügung zu stellen, um die Korrekturen durchzuführen.

In einer besonders vorteilhaften Ausführungsvariante der Erfindung enthält die Vor-Überprüfung einen Schritt, in dem überprüft wird, ob in vorbestimmten Bereichen des Formulars Eintragungen vorhanden sind, die bestimmten Minimalkriterien entsprechen. So kann etwa überprüft werden, ob die Unterschrift in dem dafür vorgesehenen Feld vorhanden ist. Bei Überweisungsformularen kann auch überprüft werden, ob in den Feldem für Kontonummern und Betrag Eintragungen vorliegen. Gegebenenfalls kann auch geprüft werden, ob diese Eintragungen etwa die Form von Zahlen oder Buchstaben aufweisen, auch wenn diese möglicherweise nicht lesbar sind. Auf diese Weise werden nur solche Formulare zurückgewiesen, für die von vornherein klar ist, daß sie auch für einen Menschen nicht interpretierbar sein werden.

Es kann jedoch auch vorgesehen sein, daß die Vor-Überprüfung einen Schritt enthält, in dem in einem vorbestimmten Bereich des Formulars eine Zeichenerkennung durchgeführt wird. So kann beispielsweise der Betrag schon am Bestätigungs-Bildschirm numerisch codiert angezeigt werden, was auch die Möglichkeit bietet, eine Überprüfung der Zulässigkeit einer Transaktion des beabsichtigten Volumens durchzuführen. Dies ist insbesonders dann interessant, wenn vor dem Einscannen die Berechtigung des Anwenders durch Einlesen eines Berechtigungsmittels festgestellt wird. Dabei kann es sich etwa um eine Kundenkarte oder um eine Bankomatkarte handeln.

In einer weiteren Ausführungsvariante der Erfindung ist vorgesehen, daß nach der Bestätigung durch den Anwender eine eindeutige Transaktionsnummer vergeben wird, und daß eine Quittung für den Anwender ausgedruckt wird, die diese Transaktionsnummer trägt, oder daß die Transaktionsnummer auf den Beleg gedruckt wird. Auf diese Weise ist es möglich, dem Kunden einen eindeutigen Beleg in die Hand zu geben, der die Durchführung der Transaktion bestätigt. Ob dieser Beleg auch im rechtlichen Sinn als Durchführungsbestätigung anerkannt wird, ist dabei sekundär. Wesentlich ist, daß es aufgrund der eindeutigen Nummer möglich ist, jede Transaktion lückenlos nachzuvollziehen. Alternativ dazu kann die Transaktionsnummer auch auf den Originalbeleg aufgedruckt werden, wenn dieser dem Anwender zurückgegeben wird. Auf diese Weise kann eine Bestätigung der Transaktion erhalten werden. Weiters betrifft die vorliegende Erfindung eine Vorrichtung zum Einlesen von Formularen nach Patentanspruch 6.

Erfindungsgemäß ist diese Vorrichtung dadurch gekennzeichnet, daß weiters ein vom Korrekturbildschirm (12) unterschiedlicher Bestätigungs-Bildschirm vorgesehen ist, auf dem die eingescannten Bild-Daten angezeigt werden. Durch die bauliche Trennung des Teils der Vorrichtung, der für die Bedienung durch einen ungeschulten Anwender vorgesehen ist und des Teils, der als Arbeitsplatz für Fachpersonal ausgebildet ist, können die oben beschriebenen Vorteile erzielt werden.

Es ist vorteilhaft, wenn eine Schaltung zur Durchführung einer Vor-Überprüfung der Bild-Daten vorgesehen ist, die mit dem Bestätigungs-Bildschirm in Verbindung steht, um das Ergebnis der Vor-Überprüfung anzuzeigen. Auf diese Weise wird erreicht, daß offensichtlich mangelhafte Formulare von vornherein zurückgewiesen werden.

Eine besonders vorteilhafte Absicherung von Transaktionen kann erreicht werden, wenn eine Druck-Einrichtung vorgesehen ist, die mit der Schaltung in Verbindung steht, die dazu ausgebildet ist, eine Quittung auszudrucken.

Besonders vorzugsweise ist am Scanner eine Einrichtung zur Feststellung der Zugangsberechtigung vorgesehen. Diese kann beispielsweise als Kartenleser ausgebildet sein, um Kundenkarten oder Kreditkarten einlesen zu können. Dadurch wird die unbefugte Verwendung der Vorrichtung verhindert.

Um eine allfällige Eingabe von Beträgen zu erleichtern, kann im Bereich des Bestätigungs-Bildschirms eine numerische Tastatur vorgesehen sein.

In der Folge wird die Erfindung anhand der in den Figuren dargestellten Ausführungsbeispiele näher erläutert. Die Figuren zeigen:

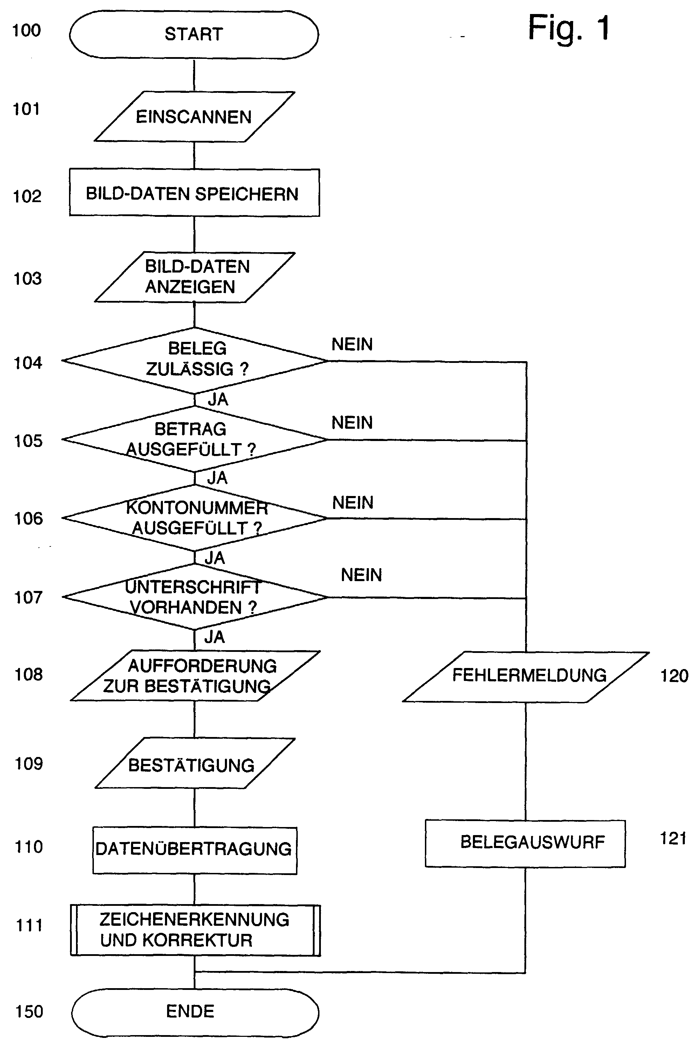

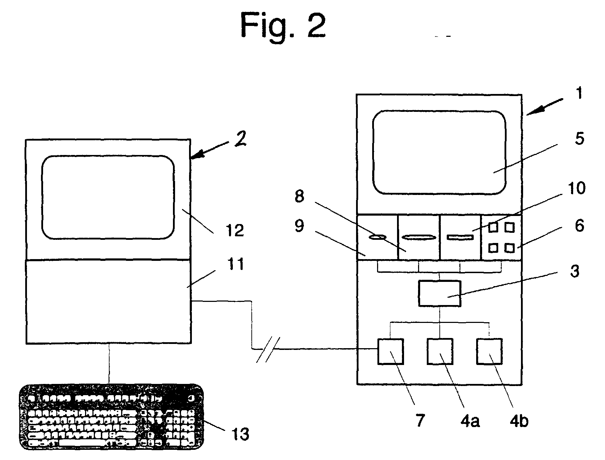

Die Fig. 1 ein Flußdiagramm des Verfahrensablaufes einer bevorzugten Ausführungsvariante der Erfindung; die Fig. 2 schematisch die grundsätzliche Anordnung der Bauteile der erfindungsgemäßen Vorrichtung.

In dem Flußdiagramm der Fig. 1 ist der grundsätzliche Verfahrensablauf dargestellt.

Der Start des Programms in dem Schritt 100 wird ausgelöst, indem sich beispielsweise ein Kunde mit seiner Bankomatkarte oder einer Kundenkarte identifiziert. Eine solche Lösung wird dann vorteilhaft sein, wenn sich das entsprechende Endgerät außerhalb einer Bankfiliale befindet. Für Geräte innerhalb von Filialen, die unter der Aufsicht des anwesenden Personals stehen, kann die Feststellung der Berechtigung entfallen und der Start durch das Einschieben des Beleges in den Scanner erfolgen.

In dem Schritt 101 erfolgt das Einscannen des Beleges im Inneren des Geräts. Die von Scanner erfaßten Bilddaten werden in dem Schritt 102 zwischengespeichert, und in dem Schritt 103 erfolgt die Anzeige des eingescannten Bildes auf dem im Gerät eingebauten Bildschirm.

In den Schritten 104, 105, 106 und 107 wird eine Vor-Überprüfung durchgeführt. Diese besteht im vorliegenden Ausführungsbeispiel aus einer ersten Überprüfung, ob es sich um einen zulässigen Beleg handelt. Unzulässige Formulartypen oder Formulare für Transaktionen, die nicht zugelassen sind, können somit ausgeschieden werden. Ferner wird überprüft ob das Betragsfeld und ob die Kontonummer ausgefüllt ist, und ob die Unterschrift vorhanden ist. Bei dieser Überprüfung geht es nicht darum, eine Zeichenerkennung durchzuführen, sondern lediglich darum zu entscheiden, ob eine Eintragung vorliegt, bei der es sich mit einer gewissen Wahrscheinlichkeit um zumindest für einen Menschen lesbare Zeichen handeln könnte. Wenn eine der Fragen der Schritte 104, 105, 106 und 107 mit Nein beantwortet wird, dann schreitet das Programm zu Schritt 120 vor, in dem eine Fehlermeldung ausgegeben wird. In Schritt 121 wird der Beleg ausgeworfen, und das Programm endet in Schritt 150.

Falls alle Fragen der Schritte 104, 105, 106 und 107 mit Ja beantwortet worden sind, wird der Kunde in dem Schritt 108 aufgefordert, die Transaktion durch Drücken eines Knopfes zu bestätigen. Nach Vorliegen dieser Bestätigung in Schritt 109 wird in dem Schritt 110 die Datenübertragung zu dem entsprechenden Zentralrechner durchgeführt. Die eigentliche Zeichenerkennung und das Korrekturverfahren, daß dann am Zentralrechner vom geschulten Fachpersonal durchgeführt wird, ist in Schritt 111 als Unterprogramm eingetragen. Da es sich dabei um ein beliebiges herkömmliches Programm handeln kann, erfolgt keine weitere Beschreibung. Das Verfahren endet in Schritt 150. Alternativ dazu kann die Zeichenerkennung auch bereits im Gerät erfolgen, um den Zentralrechner zu entlasten.

Gegebenenfalls kann nach dem Schritt 110 vorgesehen sein, daß der laufenden Transaktion eine eindeutige Nummer zugeteilt wird, und daß eine Quittung ausgedrückt wird, die diese Nummer enthält. Die Quittung kann dabei unter Aufdruck der wesentlichen Daten der Transaktion auf einem entsprechenden Formular erfolgen, sie kann jedoch auch direkt auf dem eingescannten Beleg aufgedruckt werden, der dann dem Kunden zurückgegeben wird. Der Drucker 10 dient zur Ausgabe einer Quittung.

In der Fig. 2 ist der grundsätzliche Aufgabe einer erfindungsgemäßen Vorrichtung dargestellt. Die Vorrichtung besteht grundsätzlich aus einer Selbstbedienungseinheit 1 und einer Zentraleinheit 2. Die Selbstbedienungseinheit 1 besteht aus einer Recheneinheit 3, einem Nur-Lese-Speicher 4a, einem Speicher mit wahlfreiem Zugriff 4b, einem Bestätigungsbildschirm 5, einer Eingabeeinheit 6 und einem Netzwerk-Anschluß 7, einem Scanner 8, einer Kundenkarten-Leseeinheit 9 und einem Drucker 10. Diese Bauteile sind über einen Bus miteinander verbunden. Durch Einschieben einer Kundenkarte in die Kundenkarten-Leseeinheit 9 wird das Gerät in Betrieb gesetzt. Durch eine entsprechende Anzeige auf dem Bestätigungs-bildschirm 5 wird der Kunde aufgefordert, etwa ein Überweisungsformular in den Scanner 8 einzuschieben. Die eingescannten Daten werden zur Recheneinheit 3 übermittelt, und in dem Speicher 4 abgelegt. Die Recheneinheit 3 ist dazu ausgebildet, eine Vorüberprüfung durchzuführen und den Bestätigungsbildschirm so anzusteuern, daß eine Bilddarstellung des eingescannten Bild-Datensatzes erfolgt. Bei positiver Durchführung der Vorüberprüfung wird der Kunde weiters über den Bildschirm 5 aufgefordert, die Transaktion zu bestätigen. Nach Vorliegen dieser Bestätigung, die über die Eingabeeinheit 6, also etwa eine numerische Tastatur durchgeführt wird, erfolgt die Datenübertragung über den Netzwerk-Anschluß 7 zu der Zentraleinheit 2. Diese enthält einen korrespondierenden Netzwerk-Anschluß 17, der mit einer Zentralrecheneinheit in Verbindung steht. Die Zentralrecheneinheit 11 führt die Zeichenerkennung durch, wobei eine entsprechende Korrektur des Ergebnisses, das auf einem Korrekturbildschirm 12 angezeigt wird, über eine Eingabeeinrichtung (Tastatur) 13 erfolgt.

Durch das erfindungsgemäße Verfahren kann eine Vereinfachung des Arbeitsablaufes in Banken und ähnlichen Organisationen erzielt werden. Durch Erhöhung der Akzeptanz seitens der Kunden können Einsparungen bei der Bearbeitung von Formularen erzielt werden.

## Patentansprüche

1. Verfahren zum Einlesen von Formularen, insbesonders von Bankbelegen, in eine EDV-Anlage, bestehend aus folgenden Schritten:
- Einscannen des Formulars durch optische Abtastung und Erzeugen eines Bild-Datensatzes, der dem Formular entspricht;
- Abspeichern des Bild-Datensatzes in einem Speicher der EDV-Anlage;
- Durchführung eines Zeichenerkennungs-Programmes zur Umwandlung des Bild-Datensatzes in einen Text-Datensatz;
- Anzeigen des Text-Datensatzes und falls erforderlich auch des Bild-Datensatzes auf einem Korrektur-Bildschirm;
- Durchführung eines Korrekturprogrammes, bei dem von einer Bedienungsperson nicht lesbare oder fehlerhaft erkannte Zeichen eingegeben oder korrigiert werden; und
- Abspeichern des korrigierten Text-Datensatzes zur Weiterverarbeitung,
**dadurch gekennzeichnet**, daß der Bild-Datensatz nach dem Einscannen und Abspeichern einer Vor-Überprüfung unterzogen wird und auf einem Bestätigungs-Bildschirm angezeigt wird, und daß ein Anwender, der das Formular eingescannt hat, bei positivem Ergebnis der Vor-Überprüfung zur Bestätigung aufgefordert wird, bei deren Vorliegen mit der Zeichenerkennung fortgefahren wird, wogegen bei negativem Ergebnis der Anwender zur Korrektur des Formulars aufgefordert wird.

2. Verfahren nach Anspruch 1, **dadurch gekennzeichnet**, daß die Vor-Überprüfung einen Schritt enthält, in dem überprüft wird, ob in vorbestimmten Bereichen des Formulars Eintragungen vorhanden sind, die bestimmten Minimalkriterien entsprechen.

3. Verfahren nach Anspruch 1 oder 2, **dadurch gekennzeichnet**, daß die Vor-Überprüfung einen Schritt enthält, in dem in einem vorbestimmten Bereich des Formulars, der nur das Betragsfeld umfaßt, eine Zeichenerkennung durchgeführt wird.

4. Verfahren nach einem der Ansprüche 1 bis 3, **dadurch gekennzeichnet**, daß vor dem Einscannen die Berechtigung des Anwenders durch Einlesen eines Berechtigungsmittels festgestellt wird.

5. Verfahren zum Einlesen von Bankbelegen nach einem der Ansprüche 1 bis 4, **dadurch gekennzeichnet**, daß nach der Bestätigung durch den Anwender eine eindeutige Transaktionsnummer vergeben wird, und daß eine Quittung für den Anwender ausgedruckt wird, die diese Transaktionsnummer trägt, oder daß die Transaktionsnummer auf den Beleg gedruckt wird.

6. Vorrichtung zum Einlesen von Formularen, insbesonders von Bankbelegen, die folgende Bauteile aufweist:
- einen Scanner (8) zum Einscannen von Formularen;
- einen Speicher (4) zum Speichern der vom Scanner (8) erfaßten Bild-Daten;
- eine Zentralrecheneinheit (2) zur Durchführung einer Zeichenerkennung auf der Basis der eingescannten Bild-Daten, um diese in Text-Daten umzuwandeln;
- einen Korrektur-Bildschirm (12) zur Ausgabe der Text-Daten;
- eine Eingabeeinheit (13), über die die am Korrektur-Bildschirm (12) angezeigten Text-Daten von einer Bedienungsperson korrigiert werden können,
**dadurch gekennzeichnet**, daß ein vom Korrekturbildschirm (12) unterschiedlicher Bestätigungs-Bildschirm (5) vorgesehen ist, auf dem die eingescannten Bild-Daten angezeigt werden und daß eine Schaltung zur Durchführung einer Vor-Überprüfung der Bild-Daten vorgesehen ist, die mit dem Bestätigungs-Bildschirm (5) in Verbindung steht, um das Ergebnis der Vor-Überprüfung anzuzeigen, und daß weiters eine Bestätigungs-Eingabe-Einrichtung (6) vorgesehen ist, die mit der Schaltung in Verbindung steht.

7. Vorrichtung nach Anspruch 6, **dadurch gekennzeichnet**, daß eine Druck-Einrichtung (10) vorgesehen ist, die mit der Schaltung in Verbindung steht, die dazu ausgebildet ist, eine Quittung auszudrucken.

8. Vorrichtung nach einem der Ansprüche 6 bis 7, **dadurch gekennzeichnet**, daß am Scanner (8) eine Einrichtung zur Feststellung der Zugangsberechtigung vorgesehen ist.

9. Vorrichtung nach einem der Ansprüche 6 bis 8, **dadurch gekennzeichnet**, daß der Scanner (8) samt Bestätigungs-Bildschirm (5) räumlich von dem Korrektur-Bildschirm (12) getrennt ist.

10. Vorrichtung nach einem der Ansprüche 6 bis 9, **dadurch gekennzeichnet**, daß im Bereich des Bestätigungs-Bildschirms (5) eine numerische Tastatur (6) vorgesehen ist.

## Claims

1. A procedure to read forms, especially bank documents, into an electronic data processing system, comprising the following steps:
- Scanning the form using an optical scanner and creating an image record corresponding to the form;
- Storing the image record in a computer system;
- Executing a character recognition programme to obtain a coded information record from the image record;
- Displaying the coded information record and, if necessary, the image record, on a screen display for correction;
- Executing a correction programme which permits an operator to input and/or correct non-identifiable or erroneously identified characters;
- Storing the corrected coded information record for further processing,
**characterized in that** the image record is subjected to a precheck after scanning and storing and displayed on a confirmation screen, and that the customer who has scanned in the form is requested to confirm the record if the precheck is positive, whereupon character recognition proceeds, while he is requested to correct the form if the precheck is negative.

2. Procedure as claimed in claim 1, **characterized in that** the precheck includes a step for checking whether entries meeting certain minimal requirements are present in certain predetermined areas of the form.

3. Procedure as claimed in claim 1 or 2, **characterized in that** the precheck includes a step which performs character recognition in a certain predetermined area of the form containing only the amounts field.

4. Procedure as claimed in any of claims 1 to 3, **characterized in that** the authorisation of the customer is ascertained prior to scanning by requiring the entry of an authorisation code.

5. Procedure for reading bank forms as claimed in any of claims 1 to 4, **characterized in that** a unique transaction number is supplied upon confirmation by the customer, and that either a receipt bearing this transaction number is printed for the customer, or the transaction number is printed onto the form itself.

6. Device for reading in forms, especially bank documents, including the following components:
- a scanner (8) for scanning in forms;
- a storage unit (4) for storing the image data recorded by the scanner (8);
- a central processing unit (2) for performing character recognition on the image data scanned in, converting them into coded information data;
- a correction display screen (12) to display the coded information data;
- an input unit (13) to be used by an operator for correcting the coded information data displayed on the correction screen (12);
**characterized in that** a confirmation display screen (5) is provided separately from the correction display screen (12), on which the image data scanned are displayed, and that circuitry is provided for performing a precheck on the image data, which is connected to the confirmation screen (5) to display the result of the precheck, and further that a confirmation input device (6) is provided which is connected to said circuitry.

7. Device as claimed in claim 6, **characterized in that** a printing unit (10) is provided which is connected to the circuitry for printing a receipt.

8. Device as claimed in any of claims 6 to 7, **characterized in that** the scanner (8) is provided with a unit to ascertain the authorisation of the customer.

9. Device as claimed any of claims 6 to 8, **characterized in that** the scanner (8) and confirmation screen (5) are spatially separated from the correction screen (12).

10. Device as claimed in any of claims 6 to 9, **characterized in that** a numeric keyboard (6) is provided in the vicinity of the confirmation screen (5).

## Revendications

1. Procédé pour la saisie de formulaires, en particulier de documents bancaires, par une installation de traitement de l'information comprenant les étapes suivantes.
- balayage du formulaire par un dispositif de balayage optique pour obtenir une séquence données - image correspondant au formulaire;
- sauvegarde de la séquence données - image dans une mémoire de l'installation de traitement de l'information,
- exécution d'un programme de reconnaissance de signes pour transformer la séquence données - image en une séquence données - texte;
- affichage de la séquence données - texte et, en cas de nécessité également de la séquence données - image sur un écran de correction;
- exécution d'un programme de correction par lequel les signes reconnus non lisibles ou comportant des fautes sont entrés ou corrigés par l'utilisateur; et
- sauvegarde de la séquence données - texte corrigée pour être travaillée ultérieurement,
caractérisé en ce que la séquence données - image subit un examen préliminaire test après avoir été enregistrée et sauvegardée, qu'elle est affichée sur un écran de validation, que l'utilisateur qui a balayé le formulaire est informé d'une validation si l'examen préliminaire est positif, cette validation étant suivie par la reconnaissance de signes, tandis qu'en cas de résultat négatif, l'utilisateur est appelé à effectuer une correction du formulaire.

2. Procédé selon la revendication 1, caractérisé en ce que l'examen préliminaire comprend une étape dans laquelle on vérifie si dans des domaines prédéterminés des formulaires, des enregistrements sont présents qui correspondent à des critères minimaux.

3. Procédé selon la revendication 1 ou 2, caractérisé en ce que l'examen préliminaire comporte une étape dans laquelle on exécute une reconnaissance de signes dans un domaine prédéterminé du formulaire comprenant seulement une zone valeur.

4. Procédé selon la revendication 1 à 3 caractérisé en ce que avant le balayage la validation de l'utilisateur est effectuée par la saisie d'un moyen d'autorisation.

5. Procédé pour la saisie de documents bancaires selon l'une des revendications de 1 à 4, caractérisé en ce que après la validation de l'utilisateur, un numéro unique de transaction est attribué et une quittance qui porte ce numéro de transaction est imprimée pour l'utilisateur ou le numéro de transaction est imprimée sur le document.

6. Dispositif pour la saisie de formulaires, en particulier de documents bancaires, qui présente les éléments constitutifs suivants :
- un scanner (8) pour balayer les formulaires;
- une mémoire (4) pour mémoriser la séquence données - image obtenue du scanner (8);
- une unité (2) centrale de calcul pour exécuter une reconnaissance des signes de la séquence données - image obtenue et pour transformer celle-ci en une séquence données - texte;
- un écran de correction (12) pour l'affichage de la séquence données - texte;
- une unité (13) d'entrée par laquelle la séquence donnée - texte affichée sur l'écran (12) de correction peut être corrigée par l'utilisateur;
caractérisé en ce qu'il est prévu un écran de validation (5) différent de l'écran de correction (12) pour l'affichage de la séquence données - image obtenue par balayage, un circuit pour l'exécution de l'examen préliminaire de la séquence données - images, qui coopère avec l'écran (5) de validation de manière à ce que le résultat de l'examen préliminaire soit affiché et en qu'il est également prévu une installation d'entrée (6) pour la validation qui coopère avec le circuit.

7. Dispositif selon la revendications 6, caractérisé en ce qu'il comprend une installation d'impression (10), qui coopère avec le circuit et dont le rôle est d'imprimer une quittance.

8. Dispositif selon une des revendications 6 à 7, caractérisé en ce qu'il soit prévu une installation sur le scanner (8) pour valider l'accès.

9. Dispositif selon une des revendications de 6 à 8, caractérisé en ce que le scanner (8) et l'écran (5) de validation sont séparés spatialement de l'écran (12) de correction.

10. Dispositif selon une des revendications de 6 à 9 caractérisé en ce qu'au voisinage de l'écran de validation (5), il est prévu un clavier numérique (6).
